# EUROPEAN PATENT SPECIFICATION

(11) **EP 4 015 596 B1**
(45) Date of publication and mention of the grant of the patent: **04.10.2023**
(21) Application number: 20213979.6
(22) Date of filing: 15.12.2020
(51) Int. Cl.: C09K 5/10, C23F 11/08, C23F 11/10, C23F 11/12, C23F 11/18, C23F 11/167

(54) **NOVEL COOLANTS WITH IMPROVED STORAGE STABILITY**
NEUARTIGE KÜHLMITTEL MIT VERBESSERTER LAGERSTABILITÄT
NOUVEAUX RÉFRIGÉRANTS PRÉSENTANT UNE MEILLEURE STABILITÉ DE STOCKAGE

(43) Date of publication of application: 22.06.2022
(73) Proprietor: BASF SE, 67056 Ludwigshafen am Rhein (DE)
(72) Inventor: DIETL, Harald, 67056 Ludwigshafen (DE); SIEG, Roger, 67056 Ludwigshafen (DE); LANG, Sebastian, 67056 Ludwigshafen (DE)
(74) Representative: BASF IP Association

(56) References cited:
- US-A1- 2006 163 528
- US-A1- 2010 059 703
- US-A1- 2013 099 157
- US-A1- 2014 224 193

## Description

The present application describes coolants with activity against corrosion of aluminium and aluminium alloys and improved storage stability, the corresponding coolant concentrates, and the use of such coolants.

In coolants inorganic silicates are widely known as inhibitors against corrosion of aluminium surfaces in cooling systems.

It is a disadvantage of such inorganic silicates and orthosilicates that their anticorrosive activity in coolants or coolant concentrates deteriorates during storage. Without wishing to be bound to a theory it is assumed that only monomeric and low oligomeric silicates, such as dimers, are active anticorrosive agents which loose activity on formation of polymeric silicates, presumably due to immobilisation and/or precipitation from the solution.

US 5643493 discloses corrosion inhibitor concentrates which are free of alcohol/glycol-based freezing depressant which comprise silicates and furthermore a stabilizer of the silicate against gelling, such a stabilizer may be silicon phosphonate without giving a chemical structure thereof.

No disclosure regarding the storage stability is given. Furthermore, the aqueous solutions according to US 5643493 are not coolants or coolant concentrates which serve as a basis for coolants but used as "supplemental coolant additives" which are added to coolants in use in order to neutralize degradation products accumulating in the system. Therefore, no problem with glycol-based coolants arise in such supplemental coolant additives.

WO 02/101848 discloses coolants comprising azole derivatives and orthosilicates for cooling of fuel-cell drives. Such orthosilicates (esters of orthosilicic acid) act as inhbitors against corrosion of aluminium surfaces with the advantage that they do not bear any ionic charge which makes them especially suitable for coolants with low electric conductivity.

US 2006/163528 A1 relates to aqueous antifreeze compositions based on dicarboxylic acid salts. These are suitable for use as radiator antifreezes in combustion engines, for example in motor vehicles, as heat-transfer liquids, for example in solar plants, or as cooling brines, for example in stationary cooling refrigeration plants. In its examples it refers to a metasilicate/silicophosphonate mixture.

Unpublished European Patent Application No. 20192954.4 filed on August 26, 2020, discloses coolants comprising azole derivatives, esters of orthosilicic acid or alkoxy alkylsilanes, certain tertiary amines, monocarboxylic acids, and optionally at least one silicophosphonate for cooling systems of vehicles with electric engines, fuel cells or hybrid engines with a combination of combustion engines with electric engines or a combination of combustion engines with fuel cells.

In a corrosion test a composition with silicophosphonate exhibited less loss of silicon content from tetraethoxysilane during corrosion than without silicophosphonate.

This document is silent about inorganic silicates and storage stability of such coolants.

It was an object of the present invention to provide a process for increasing the storage stability of coolants and coolant concentrates with a good anti-corrosive activity for aluminium.

The problem was solved by the process according to Claim 1.

Another subject matter of the present invention are coolants, comprising
(A) at least one glycol
(B) water
(C) at least one azole derivative
(D) optionally at least one inorganic silicate
(E) optionally at least one tertiary amine, preferably a tertiary amine bearing at least one 2-hydroxyethyl- or 2-hydroxypropyl-group
(F) at least one carboxylic acid
(G) at least one silicophosphonate of the general structure (V) 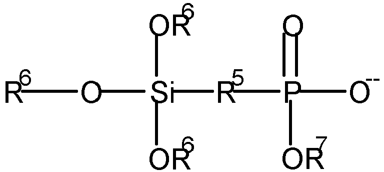 where
   R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
   R⁶ independently of another is hydrogen, C₁- to C₄-alkyl, or hydroxy-C₂- to C₄-alkyl, preferably hydrogen, methyl, ethyl, n-propyl, iso-propyl, n-butyl, iso-butyl, sec-butyl or tert-butyl, more preferably hydrogen, methyl, ethyl or propyl, and R⁷ is C₁- to C₄-alkyl
(H) optionally at least one further coolant additive.

Such coolants exhibit both, a good anti-corrosion activity, especially against aluminium corrosion, as well as an increased storage stability by maintaining the concentration of the inorganic silicate (D) in the coolant during the storage on a level sufficient to be effective against aluminium corrosion.

Details to the constituents are as follows:

### Glycol (A)

As alkylene glycol component or derivative thereof (A), it is possible to use, in particular, monoethylene glycol, diethylene glycol, triethylene glycol, tetraethylene glycol and mixtures thereof, but also monopropylene glycol, dipropylene glycol and mixtures thereof, 1,3-propanediol, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether, or glycerol, in each case either alone or as mixtures thereof.

### Water (B)

Water used for the coolants according to the present invention should be neutral with a pH value of about 7.

In case hard water is used hard water stabilizers can be added to the coolant, e.g. based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

### Azole Derivatives (C)

Azole derivatives in the context of the present invention mean five-membered heterocyclic compounds having 2 or 3 heteroatoms from the group consisting of nitrogen and sulfur and comprise no or at most one sulfur atom and can bear an aromatic or saturated six-membered fused- on ring.

These five-membered heterocyclic compounds (azole derivatives) usually contain two N atoms and no S atom, 3 N atoms and no S atom or one N atom and one S atom as heteroatoms.

Preferred groups of the specified azole derivatives are annellated imidazoles and annellated 1 ,2,3-triazoles of the general formula 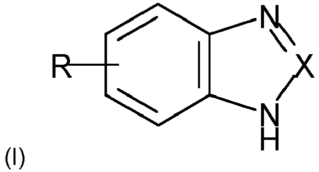 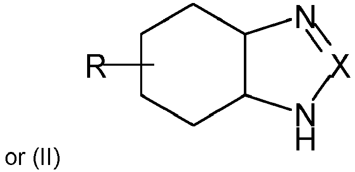 where
the variable R is hydrogen or a C₁-C₁₀-alkyl radical, in particular methyl or ethyl, and
the variable X is a nitrogen atom or the C-H group.

Typical and preferred examples of azole derivatives of the general formula (I) are benzimidazole (X = C-H, R = H), benzotriazoles (X = N, R = H) and tolutriazole (tolyltriazole) (X = N, R = CH₃). A typical example of an azole derivative of the general formula (II) is hydrogenated 1,2,3-tolutriazole (tolyltriazole) (X = N, R = CH₃).

A further preferred group of the specified azole derivatives is benzothiazoles of the general formula (III) 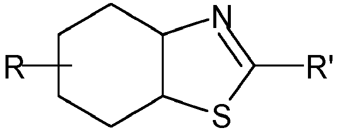 where
the variable R is as defined above and
the variable R' is hydrogen, a C₁-C₁₀-alkyl radical, in particular methyl or ethyl, or in particular a mercapto group (-SH). A typical example of an azole derivative of the general formula (III) is 2-mercaptobenzothiazole.

In a preferred embodiment it is also possible to use (2-benzothiazylthio)acetic acid (R' = -S-CH₂-COOH) or (2-benzothiazylthio) propionic acid (R' = -S-CH₂-CH₂-COOH).

Further suitable azole derivatives are non-annellated azole derivatives of the general formula (IV) 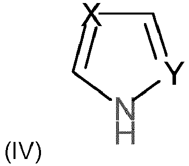 where
the variables X and Y together are two nitrogen atoms or
one nitrogen atom and a C-H group,
for example 1H-1,2,4-triazole (X = Y = N) or preferably imidazole (X = N, Y = C-H).

For the purposes of the present invention, benzimidazole, benzotriazole, tolutriazole, hydrogenated tolutriazole, (2-benzothiazylthio)acetic acid or (2-benzothiazylthio) propionic acid or mixtures thereof, in particular benzotriazole or tolutriazole, are very particularly preferred as azole derivatives.

The azole derivatives mentioned are commercially available or can be prepared by conventional methods. Hydrogenated benzotriazoles such as hydrogenated tolutriazole are likewise obtainable as described in DE-A 1 948 794 and are also commercially available.

### Inorganic silicate (D)

In the context of the present invention an inorganic silicate is a silicon compound consisting solely of elements selected from the group consisting of silicon, oxygen, hydrogen and metals from the main groups I, II, and III (IUPAC groups 1, 2, and 13) of the periodic table of the elements.

Preferred metals from the main group I are lithium, sodium, and potassium, more preferred sodium and potassium.

Preferred metals from the main group II are magnesium and calcium.

Preferred metals from the main group III are boron and aluminium.

More preferred metals are those from main group I and II, most preferably from main group I.

Especially preferred metals are sodium and potassium.

In a preferred embodiment the inorganic silicate (D) is selected from the group consisting of orthosilicates (SiO₄⁴⁻), metasilicates (SiO₃²⁻), and pyrosilicates (Si₂O₇⁶⁻), more preferably is metasilicate (SiO₃²⁻), and most preferably is sodium metasilicate (Na₂SiO₃) or potassium metasilicate (K₂SiO₃), especially sodium metasilicate (Na₂SiO₃).

Compounds (D) are mainly used as inhibitors of aluminium corrosion.

### Tertiary Amine (E)

The optional compound (E) is a tertiary amine, preferably a tertiary amine bearing at least one 2-hydroxyethyl- or 2-hydroxypropyl-group.

In a preferred embodiment of the present invention no tertiary amines (E) are present in the coolant.

Preferred tertiary amines (E) bear at least one 2-hydroxyethyl- or 2-hydroxypropyl-group. Potential tertiary amines (E) may bear one, two or three 2-hydroxyethyl- or 2-hydroxypropyl-groups, preferably two or three 2-hydroxyethyl- or 2-hydroxypropyl-groups and more preferably 2-hydroxyethyl-groups.

The substituents of the tertiary amine (E) not being a 2-hydroxyethyl- or 2-hydroxypropyl-group may be aliphatic, cycloaliphatic or aromatic groups with up to 20 carbon atoms, preferably with up to 18, more preferably with up to 16, even more preferably with up to 14, and especially up to 12 carbon atoms.

These substituents are preferably aliphatic or aromatic and more preferably aliphatic.

Aromatic substituents can be e.g. phenyl, tolyl or naphthyl.

Aliphatic substituents may be linear or branched, preferred are linear alkyl substituents comprising 1 to 18 carbon atoms, preferably 2 to 16, more preferably 4 to 14, and especially 6 to 12 carbon atoms.

In the compounds (E) the substituent is preferably derived from fatty amines which are preferably obtainable by hydrogenation and amination of fatty acids and esters, particularly preferably by hydrogenation and amination of 2-ethylhexanoic acid, octanoic acid (caprylic acid), pelargonic acid (nonanoic acid), 2-propylheptanoic acid, decanoic acid (capric acid), undecanoic acid, dodecanoic acid (lauric acid), tridecanoic acid, tetradecanoic acid (myristic acid), pentadecanoic acid, palmitic acid (hexadecanoic acid), palmitoleic acid [(9Z)-hexadec-9-enoic acid], margaric acid (heptadecanoic acid), stearic acid (octadecanoic acid), oleic acid [(9Z)-octadec-9-enoic acid], elaidic acid [(9E)-octadec-9-enoic acid], linoleic acid [(9Z,12Z)-octadeca-9,12-dienoic acid], linolenic acid [(9Z,12Z,15Z)-octadeca-9,12,15-trienoic acid], eleostearic acid [(9Z,11E,13E)-octadeca-9,11,13-trienoic acid], ricinoleic acid ((R)-12-hydroxy-(Z)-octadec-9-enoic acid), isoricinoleic acid [(S)-9-hydroxy-(Z)-octadec-12-enoic acid], nonadecanoic acid, arachidic acid (eicosanoic acid), behenic acid (docosanoic acid) and erucic acid [(13Z)-docos-13-enoic acid].

Examples for tertiary amines (E) bearing one 2-hydroxyethyl- or 2-hydroxypropyl-group and two other substituents are those of the general formula (I) 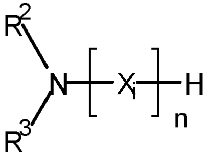 where
R² and R³ independently of another each are a substituent as described above, preferably a linear or branched, preferred a linear alkyl substituent comprising 1 to 18 carbon atoms, preferably 2 to 16, more preferably 4 to 14, and especially 6 to 12 carbon atoms, or together may form a five- or six-membered ring including the nitrogen atom,
Xᵢ is -CH₂-CH₂-O-, -CH₂-CH(CH₃)-O- or -CH(CH₃)-CH₂-O-, preferably -CH₂-CH₂-O-, and
n is a positive integer from 1 to 5, preferably from 1 to 4, more preferably from 1 to 3, even more preferably 1 or 2, and especially 1.

Preferred individuals are dimethyl ethanolamine, dimethyl propanolamine, diethyl ethanolamine, diethyl propanolamine, di-n-butyl ethanolamine, di-n-butyl propanolamine, N-hydroxyethyl pyrrolidine, N-hydroxyethyl piperidine, and N-hydroxyethyl morpholine.

Examples for tertiary amines (E) bearing two 2-hydroxyethyl- or 2-hydroxypropyl-groups and one other substituent are of the general formula (II) 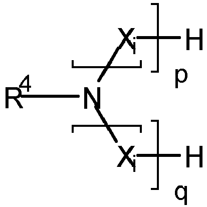 where
R⁴ is a substituent as described above, preferably a linear or branched, preferred a linear alkyl substituent comprising 1 to 18 carbon atoms, preferably 2 to 16, more preferably 4 to 14, and especially 6 to 12 carbon atoms,
each Xi for i = 1 to p and 1 to q is independently selected from the group consisting of -CH₂-CH₂-O-, -CH₂-CH(CH₃)-O- or -CH(CH₃)-CH₂-O-, preferably -CH₂-CH₂-O-, and
p and q independently of another are a positive integer from 1 to 5, preferably from 1 to 4, more preferably from 1 to 3, even more preferably 1 or 2, and especially 1.

Preferred individuals are the bis(2-hydroxyethyl) amines or bis(2-hydroxypropyl) amines bearing as substituent R⁴ n-hexylamine, 2-methylpentylamine, n-heptylamine, 2-heptylamine, isohep-tylamine, 1-methylhexylamine, n-octylamine, 2-ethylhexylamine, 2-aminooctane, 6-methyl-2-heptylamine, n-nonylamine, isononylamine, n-decylamine and 2-propylheptylamine or mixtures thereof.

Particular preference is given to bis(2-hydroxyethyl)-substituted n-hexylamine, n-octylamine, 2-ethylhexylamine and n-decylamine, with n-octylamine and 2-ethylhexylamine, in particular bis(2-hydroxyethyl) n-octylamine, being particularly preferred.

These compounds are preferably obtainable by reacting the corresponding amines R⁴-NH₂ with alkylene oxides to the desired average statistical degree of alkoxylation, preferably under basic conditions. This is particularly preferred when the structural unit Xᵢ is derived from ethylene oxide or propylene oxide, preferably from ethylene oxide.

Examples for tertiary amines (E) bearing three 2-hydroxyethyl- or 2-hydroxypropyl-groups are triethanolamine and tripropanolamine, preferably triethanolamine.

Preferred amines (E) are dimethyl ethanolamine, dimethyl propanolamine, diethyl ethanolamine, di-n-butyl ethanolamine, N-hydroxyethyl morpholine, bis(2-hydroxyethyl) n-hexylamine, bis(2-hydroxyethyl) n-octylamine, bis(2-hydroxyethyl) 2-ethylhexylamine, bis(2-hydroxyethyl) n-decylamine, and triethanolamine.

### Carboxylic Acid (F)

The carboxylic acid (F) is preferably a monoarboxylic acid (F1) or a dicarboxylic acid (F2). Higher carboxylic acids are also possible but are less preferred. Preferably no carboxylic acid with a functionality of higher than two is present in the coolant according to the invention.

The carboxylic acids may be aliphatic, cycloaliphatic or aromatic, preferably aliphatic or aromatic, and most preferably aliphatic.

In a preferred embodiment the coolant according to the invention comprises at least one aliphatic monocarboxylic acid (F1).

In another preferred embodiment the coolant according to the invention comprises at least one aliphatic dicarboxylic acid (F2).

In another preferred embodiment the coolant according to the invention comprises mixtures of at least one aliphatic monocarboxylic acid (F1) and at least one aliphatic dicarboxylic acid (F2).

Suitable monocarboxylic acids (F1) may be linear or branched-chain, aliphatic, cycloaliphatic or aromatic monocarboxylic acids with up to 20 carbon atoms, preferably with from 2 to 18, more preferably with from 5 to 16, even more preferably with from 5 to 14, most preferably with from 6 to 12, and especially with from 8 to 10 carbon atoms.

Branched-chain aliphatic monocarboxylic acids are preferred over the corresponding linear monocarboxylic acids.

Useful linear or branched-chain, aliphatic or cycloaliphatic monocarboxylic acids (F1) are, for example, propionic acid, pentanoic acid, 2,2-dimethylpropanoic acid, hexanoic acid, 2,2-dimethylbutaneoic acid, cyclohexyl acetic acid, octanoic acid, 2-ethylhexanoic acid, nonanoic acid, isononanoic acid, decanoic acid, undecanoic acid or dodecanoic acid.

A suitable aromatic monocarboxylic acid (F1) is in particular benzoic acid; additionally useful are also, for example, C₁- to C₈-alkylbenzoic acids such as o-, m-, p-methylbenzoic acid or p-tert-butylbenzoic acid, and hydroxyl-containing aromatic monocarboxylic acids such as o-, m- or p-hydroxybenzoic acid, o-, m- or p-(hydroxymethyl)benzoic acid or halobenzoic acids such as o-, m- or p-fluorobenzoic acid.

Especially preferred are 2-ethylhexanoic acid and isononanoic acid.

As used herein, isononanoic acid refers to one or more branched-chain aliphatic carboxylic acids with 9 carbon atoms. Embodiments of isononanoic acid used in the engine coolant composition may include 7-methyloctanoic acid (e.g., CAS Nos. 693-19-6 and 26896-18-4), 6,6-dimethylheptanoic acid (e.g., CAS No. 15898-92-7), 3,5,5-trimethylhexanoic acid (e.g., CAS No. 3302-10-1), 3,4,5-trimethylhexanoic acid, 2,5,5-trimethylhexanoic acid, 2,2,4,4-tetramethylpentanoic acid (e.g., CAS No. 3302-12-3) and combinations thereof. In a preferred embodiment, isononanoic acid has as its main component greater than 90% of one of 7-methyloctanoic acid, 6,6-dimethylheptanoic acid, 3,5,5-trimethylhexanoic acid, 3,4,5-trimethylhexanoic acid, 2,5,5-trimethylhexanoic acid, and 2,2,4,4-tetramethylpentanoic acid. The balance of the isononanoic acid may include other nine carbon carboxylic acid isomers and minor amounts of one or more contaminants. In a preferred embodiment, the isononanoic acid has as its main component greater than 90% of 3,5,5-trimethylhexanoic acid and even more preferably, the main component is greater than 95% 3,5,5-trimethylhexanoic acid.

Preferred dicarboxylic acids (F2) as carboxylic acids (F) are linear or branched dicarboxylic acids (F2), preferably linear aliphatic dicarboxylic acid, more preferably with 5 to 14 carbon atoms, most preferably from 6 to 12 carbon atoms.

If used, examples of dicarboxylic acids are oxalic acid, malonic acid, succinic acid, glutaric acid, adipic acid, pimelic acid, suberic acid, azelaic acid, sebacic acid, undecanedioic acid, dodecanedioic acid, alkyl or alkenyl succinic acids, 2-metylbutane dioic acid, 2-ethylpentanedioic acid, 2-n-dodecylbutanedioic acid, 2-n-dodecenylbutanedioic acid, 2-phenylbutanedioic acid, 2-(p-methylphenyl) butanedioic acid, 2,2-dimethylbutanedioic acid, 2,3-dimethylbutanedioic acid; 2,3,4 trimethylpentanedioic acid, 2,2,3-trimethylpentanedioic acid; 2-ethyl-3-methylbutanedioic maleic acid, fumaric acid, pent-2-enedioic acid, hex-2-enedioic acid; hex-3-endioic acid; 5-methylhex-2-enedioic acid; 2,3-dimethylpent-2-enedioic acid; 2-methylbut-2-enedioic acid, 2-dodecylbut-2-enedioic acid, phthalic acid, isophthalic acid, terephthalic acid and substituted phthalic acids such as 3-methylbenzene-1,2-dicarboxylic acid; 4-phenylbenzene-1,3-dicarboxylic acid; 2-(1-propenyl) benzene-1,4-dicarboxylic acid, and 3,4-dimethylbenzene-1,2-dicarboxylic acid.

Among those the aliphatic dicarboxylic acids are preferred, more preferred are the dicarboxylic acids with from 6 to 12 carbon atoms and most preferred is the dicarboxylic acid (F2) selected from the group consisting of adipic acid, sebacic acid, azelaic acid, and dodecanedioic acid.

It is possible, however disadvantageous, to use carboxylic acids with a higher functionality than 2, e.g. tricarboxylic acids, in addition to or instead of the carboxylic acids (F1) or (F2).

If used, di- or tricarboxylic acids can be aliphatic, cycloaliphatic or aromatic, preferably aliphatic or aromatic and more preferably aliphatic with up to 20 carbon atoms, preferably with up to 18, more preferably with up to 16, even more preferably with up to 14, and especially up to 12 carbon atoms.

If used, examples of tricarboxylic acids are benzene tricarboxylic acids (all isomers) and triazinetriiminocarboxylic acids such as 6,6',6"-(1,3,5-triazine-2,4,6-triyltriimino)trihexanoic acid.

### Silicophosphonate (G)

According to the invention at least one silicophosphonate (G) is used in the coolant.

Silicophosphonates are those of the general structure (V) 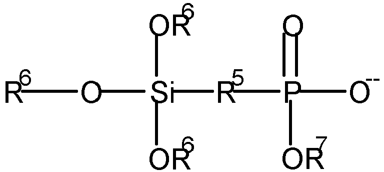 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ independently of another is hydrogen, C₁- to C₄-alkyl, or hydroxy-C₂- to C₄-alkyl, preferably hydrogen, methyl, ethyl, n-propyl, iso-propyl, n-butyl, iso-butyl, sec-butyl or tert-butyl, 2-hydroxyethyl, or 2-hydroxypropyl, more preferably hydrogen, methyl, ethyl or propyl,
and R⁷ is C₁- to C₄-alkyl.

Such silicophosphonates may exist as free phosphonate acid or in the form of their sodium or potassium salts, preferably sodium or potassium salt, more preferably as sodium salt.

In a preferred embodiment the at least one silicate (D) and at least one silicophosphonate (G) are applied as a mixture of components (D) and (G) to the coolant or coolant concentrate, e.g. in a weight ratio (D) : (G) of 1 : 2 to 10 : 1, preferably 1 : 1 to 5 : 1 and more preferably 2 : 1 to 4 : 1. Such a mixture may be used as a formulation in water (B) and/or glycol (A) for better application.

### Further Coolant Additives (H)

It is further possible to add further typical coolant additives to the coolants of the present invention.

As further customary assistants, the inventive coolant may also comprise, in customary small amounts, defoamers (generally in amounts of from 0.003 to 0.008% by weight) and, for reasons of hygiene and safety in the event that it is swallowed, bitter substances (for example of the denatonium benzoate type) and dyes.

### Composition

Typically, the coolants according to the invention are composed as follows:
(A) at least one glycol: 10 to 90 wt%, preferably 20 to 80 wt%, more preferably 30 to 70 wt%
(B) water: 10 to 90 wt%, preferably 20 to 80 wt%, more preferably 30 to 70 wt%
(C) at least one azole derivative: 0.01 to 1 wt%, preferably 0.02 to 0.9 wt%, more preferably 0.03 to 0.8 wt%, even more preferably 0.04 to 0.5, especially 0.05 to 0.3 wt%
(D) at least one inorganic silicate: 0.001 to 1 wt%, preferably 0.005 to 0.75 wt%, more preferably 0.01 to 0.5 wt%, even more preferably 0.02 to 0.25, especially 0.03 to 0.1 wt%
(E) optionally at least one tertiary amine: 0 to 1 wt%, preferably 0.01 to 0.9 wt%, more preferably 0.015 to 0.8 wt%, especially 0 wt%
(F) at least one carboxylic acid: 2 to 4.5 wt%, preferably 2.2 to 4 wt%, more preferably 2.5 to 3.5 wt%
(G) at least one silicophosphonate: 0.01 to 1 wt%, preferably 0.02 to 0.8 wt%, more preferably 0.03 to 0.6 wt%
(H) optionally at least on further coolant additive: 0 to 0.5 wt% for each further coolant additive, preferably 0.01 to 0.4 wt%, more preferably 0.02 to 0.3 wt%.
with the proviso that the sum of all components always add up to 100 wt%.

In a preferred embodiment of the present invention no tertiary amines (E) are present in the coolant.

A further embodiment of the present invention are coolant concentrates. Coolants usually are obtained from coolant concentrates by dilution with water (B). Hence, the coolant concentrates usually contain little or no water (B).

Typically, the coolant concentrates according to the invention are composed as follows:
(A) at least one glycol: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 2 wt%, preferably 0.04 to 1.8 wt%, more preferably 0.06 to 1.6 wt%, even more preferably 0.08 to 1, especially 0.1 to 0.6 wt%
(D) at least one inorganic silicate: 0.002 to 2 wt%, preferably 0.01 to 1.5 wt%, more preferably 0.02 to 1 wt%, even more preferably 0.04 to 0.5, especially 0.06 to 0.2 wt%
(E) optionally at least one tertiary amine: 0 to 2 wt%, preferably 0.02 to 1.8 wt%, more preferably 0.03 to 1.6 wt%, especially 0 wt%
(F) at least one carboxylic acid: 4 to 9 wt%, preferably 4.4 to 8 wt%, more preferably 5 to 7 wt%
(G) at least one silicophosphonate: 0.02 to 2 wt%, preferably 0.04 to 1.6 wt%, more preferably 0.06 to 1.2 wt%
(H) optionally at least on further coolant additive: 0 to 1 wt% for each further coolant additive, preferably 0.02 to 0.8 wt%, more preferably 0.04 to 0.6 wt%.
with the proviso that the sum of all components always add up to 100 wt%.

In a preferred embodiment of the present invention no tertiary amines (E) are present in the coolant concentrate.

A further embodiment of the present invention are coolant super concentrates. Coolant concentrates usually are obtained from coolant super concentrates by dilution with the glycol (A), respectively coolants may be obtained from coolant super concentrates by dilution with the glycol (A) and water (B). Hence, the coolant concentrates usually contain little or no water (B) and little or no glycol (A).

Typically, the coolant super concentrates according to the invention are composed as follows:
(A) at least one glycol: 60 to 95 wt%, preferably 70 to 90 wt%, more preferably 75 to 85 wt%
(B) water: 0 to 10 wt%, preferably 0 to 8 wt%, more preferably 0 to 5 wt%
(C) at least one azole derivative: 0.04 to 4 wt%, preferably 0.1 to 3.6 wt%, more preferably 0.2 to 3 wt%, even more preferably 0.3 to 2, especially 0.4 to 1.5 wt%
(D) at least one inorganic silicate: 0.005 to 4 wt%, preferably 0.02 to 3 wt%, more preferably 0.05 to 2 wt%, even more preferably 0.1 to 1, especially 0.15 to 0.8 wt%
(E) optionally at least one tertiary amine: 0 to 4 wt%, preferably 0.1 to 3.5 wt%, more preferably 0.2 to 2.5 wt%, especially 0 wt%
(F) at least one carboxylic acid: 8 to 18 wt%, preferably 9 to 16 wt%, more preferably 10 to 14 wt%
(G) at least one silicophosphonate: 0.05 to 4 wt%, preferably 0.1 to 3 wt%, more preferably 0.15 to 2.5 wt%
(H) optionally at least on further coolant additive: 0 to 1 wt% for each further coolant additive, preferably 0.05 to 1.5 wt%, more preferably 0.08 to 1.2 wt%.
with the proviso that the sum of all components always add up to 100 wt%.

In a preferred embodiment of the present invention no tertiary amines (E) are present in the coolant super concentrate.

### Examples

The invention is illustrated in the following examples, but without it being restricted thereto.

Coolant concentrate compositions were prepared by mixing the constituents as listed in Table 1 (all amounts given in weight% unless stated otherwise) and the features and physical parameters as pointed out in Table 1 were determined as follows:

| | |
|---|---|
| Water, % | DIN 51777 |
| pH as-is | ASTM D 1287 |

Exemplaric coolant concentrates were formulated as follows and the silicon content was measured by ICP-OES after 25 weeks of storage at room temperature.

**Table 1**

| **Raw material** | Ex 1 | Ex 2 (Comp) | Ex 3 | Ex 4 (Comp) |
|---|---|---|---|---|
| Sebacic acid, wt% | 2.859 | 2.841 | 3.180 | 3.071 |
| Adipic acid, wt% | 0.852 | 0.841 | | |
| Dodecanedioic acid, wt% | 0.141 | 0.123 | | |
| Tolutriazole, wt% | 0.204 | 0.208 | 0.161 | 0.153 |
| Iso nonanoic acid, wt% | | | 0.575 | 0.696 |
| Azol inhibitor, wt% [1] | | | 0.158 | 0.156 |
| Silicophosphonate, wt% [2][3] | 0.06 | | 0.0658 | |
| Na metasilicate, wt% [2] | 0.14 | | 0.158 | |
| Na metasilicate, wt% | | 0.14% | | 0.15 |
| water content (Karl-Fischer Titration), wt% | 2.57 | 2.78 | 2.10 | 2.84 |
| pH [4] | 7.17 | 7.07 | 7.07 | 7.08 |
| mono ethylene glycol wt% | 93.174 | 93.067 | 93.6022 | 92.934 |
| Si content (calc) wt.ppm [5] | 185 | 185 | 210 | 199 |
| Si content (measured) wt.ppm [6] | 140 | 39 | 150 | 44 |

| | | | | |
|---|---|---|---|---|
| [1] Azol inhibitor as described in WO 2014/124826 A1, Example KM2, KM3, and KM7 [2] Silicophosphonate and sodium metasilicate were applied together in a mixture of sodium metasilicate pentahydrate and silicophosphonate in a weight ratio of approx. 2.4 : 1 [3] Sodium silicophosphonate according to formula (V), R⁶ = H, R⁵ = C₃H₆, R⁷ = methyl, ethyl (molar ratio 1:1) [4] the pH-value given was adjusted by addition of sodium hydroxide resp. potassium hydroxide to the formulation [5] Silicon content calculated according to the formulation as given in the table [6] Silicon content measured by ICP-OES after 25 weeks of storage at room temperature | | | | |

It can easily be seen that the silicon content of all samples decreased during storage over 25 weeks. However, the samples of Examples 1 and 3 comprising a mixture of silicophosphonate and sodium metasilicate exhibited a higher silicon content after storage than the comparative formulations of Examples 2 and 4 comprising sodium metasilicate without the presence of silicophosphonate.

The coolant compositions of Examples 1 to 4 were compared in corrosion tests according to ASTM D 1384 at 88 °C and the results (weight change, mg/cm²) are given in Table 2.

**Table 2**

| **Example** | **Copper** | **Solder** | **Brass** | **Steel** | **Cast iron** | **Cast aluminium G-ALSi6Cu4** |
|---|---|---|---|---|---|---|
| 1 | -0.09 | 0.00 | -0.05 | -0.01 | -0.02 | 0.00 |
| 2 (Comparative) | -0.06 | -0.03 | -0.06 | -0.02 | -0.07 | 0.14 |
| 3 | -0.11 | 0.03 | -0.08 | -0.01 | 0.01 | 0.06 |
| 4 (Comparative) | -0.07 | 0.08 | -0.07 | -0.01 | -0.02 | -0.06 |

It can be seen that the corrosion tests on aluminium of the comparative Examples 2 and 4 exhibit a slight increase of weight or even material removal, while Examples 1 and 3 yield a constant weight of the specimen or a slight increase of the weight which support the higher efficacy of the silicate as corrosion inhibitor in the presence of silicophosphonate.

The corrosion tests on the other metals and alloys exhibit the good anti-corrosion activity of the formulations according to Examples 1 to 4.

## Claims

1. Process for improving the storage stability of inorganic silicates (D) in coolants or coolant concentrates, **characterized in that** the coolant or coolant concentrate further to the inorganic silicate (D) comprises at least one silicophosphonate (G) of the general structure (V) 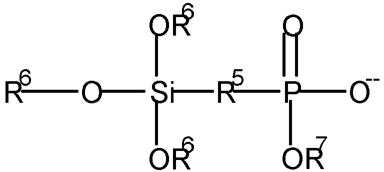 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ independently of another is hydrogen, C₁- to C₄-alkyl, or hydroxy-C₂- to C₄-alkyl, preferably hydrogen, methyl, ethyl, n-propyl, iso-propyl, n-butyl, iso-butyl, sec-butyl or tert-butyl, 2-hydroxyethyl, or 2-hydroxypropyl, more preferably hydrogen, methyl, ethyl or propyl,
and R⁷ is C₁- to C₄-alkyl.

2. Process according to Claim 1, **characterized in that** the inorganic silicate (D) is selected from the group consisting of orthosilicates (SiO₄⁴⁻), metasilicates (SiO₃²⁻), and pyrosilicates (Si₂O₇⁶⁻), more preferably is metasilicate (SiO₃²⁻), and most preferably is sodium metasilicate (Na₂SiO₃) or potassium metasilicate (K₂SiO₃), especially sodium metasilicate (Na₂SiO₃).

3. Use of at least one silicophosphonate (G) of the general structure (V) 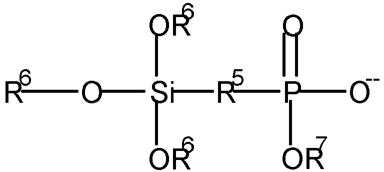 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ independently of another is hydrogen, C₁- to C₄-alkyl, or hydroxy-C₂- to C₄-alkyl, preferably hydrogen, methyl, ethyl, n-propyl, iso-propyl, n-butyl, iso-butyl, sec-butyl or tert-butyl, 2-hydroxyethyl, or 2-hydroxypropyl, more preferably hydrogen, methyl, ethyl or propyl,
and R⁷ is C₁- to C₄-alkyl
for increasing the storage stability of coolants or coolant concentrates containing at least one inorganic silicate (D).

4. Coolant, comprising
(A) at least one glycol
(B) water
(C) at least one azole derivative
(D) at least one inorganic silicate
(E) optionally at least one one tertiary amine, preferably a tertiary amine bearing at least one 2-hydroxyethyl- or 2-hydroxypropyl-group
(F) at least one carboxylic acid
(G) at least one silicophosphonate of the general structure (V) 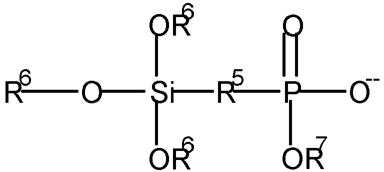 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ independently of another is hydrogen, C₁- to C₄-alkyl, or hydroxy-C₂- to C₄-alkyl, preferably hydrogen, methyl, ethyl, n-propyl, iso-propyl, n-butyl, iso-butyl, sec-butyl or tert-butyl, 2-hydroxyethyl, or 2-hydroxypropyl, more preferably hydrogen, methyl, ethyl or propyl,
and R⁷ is C₁- to C₄-alkyl
(H) optionally at least one further coolant additive.

5. Coolant according to Claim 4, wherein the glycol (A) is selected from the group consisting of monoethylene glycol, diethylene glycol, triethylene glycol, tetraethylene glycol, monopropylene glycol, dipropylene glycol, 1,3-propanediol, higher poly alkylene glycols, alkylene glycol ethers, and glycerol.

6. Coolant according to any of the preceding claims, wherein the azole derivative (C) is selected from the group consisting of benzimidazole, benzotriazole, tolutriazole, hydrogenated tolutriazole, (2-benzothiazylthio)acetic acid, and (2-benzothiazylthio) propionic acid.

7. Coolant according to any of the claims 4 to 6, wherein the inorganic silicate (D) is selected from the group consisting of orthosilicates (SiO₄⁴⁻), metasilicates (SiO₃²⁻), and pyrosilicates (Si₂O₇⁶⁻), more preferably is metasilicate (SiO₃²⁻), and most preferably is sodium metasilicate (Na₂SiO₃) or potassium metasilicate (K₂SiO₃), especially sodium metasilicate (Na₂SiO₃).

8. Coolant according to any of the claims 4 to 7, wherein the carboxylic acid (F) is a mono- or dicarboxylic acid or mixtures thereof, preferably an aliphatic mono- or aliphatic dicarboxylic acid or mixtures thereof.

9. Coolant according to any of the claims 4 to 8, wherein the carboxylic acid (F) is a linear or branched monocarboxylic acid (F1), preferably branched aliphatic monocarboxylic acid, more preferably with 5 to 14 carbon atoms, most preferably from 6 to 12 carbon atoms.

10. Coolant according to any of the claims 4 to 9, wherein the monocarboxylic acid (F1) is selected from the group consisting of 2-ethylhexanoic acid and isononanoic acid.

11. Coolant according to any of the claims 4 to 10, wherein the carboxylic acid (F) is a linear or branched dicarboxylic acid (F2), preferably linear aliphatic dicarboxylic acid, more preferably with 5 to 14 carbon atoms, most preferably from 6 to 12 carbon atoms.

12. Coolant according to any of the claims 4 to 11, wherein the dicarboxylic acid (F2) is a selected from the group consisting of adipic acid, sebacic acid, azelaic acid, and dodecanedioic acid.

## Patentansprüche

1. Verfahren zur Verbesserung der Lagerstabilität von anorganischen Silikaten (D) in Kühlmitteln oder Kühlmittelkonzentraten, **dadurch gekennzeichnet, dass** das Kühlmittel oder Kühlmittelkonzentrat neben dem anorganischen Silikat (D) mindestens ein Silicophosphonat (G) der allgemeinen Formel (V) umfasst: 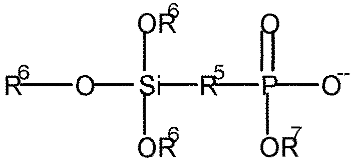 wobei
R⁵ ein zweiwertiger organischer Rest ist, bevorzugt eine 1,ω-Alkylengruppe mit 1 bis 6 und bevorzugt 1 bis 4 Kohlenstoffatomen, weiter bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wasserstoff, C₁- bis C₄-Alkyl oder Hydroxy-C₂- bis -C₄-alkyl ist, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, weiter bevorzugt Wasserstoff, Methyl, Ethyl oder Propyl,
und R⁷ C₁- bis C₄-Alkyl ist.

2. Verfahren nach Anspruch 1, **dadurch gekennzeichnet, dass** das anorganische Silikat (D) aus der Gruppe bestehend aus Orthosilikaten (SiO₄⁴⁻), Metasilikaten (SiO₃²⁻) und Pyrosilikaten (Si₂O₇⁶⁻) ausgewählt ist, weiter bevorzugt Metasilikat (SiO₃²⁻) ist und ganz besonders bevorzugt Natriummetasilikat (Na₂SiO₃) oder Kaliummetasilikat (K₂SiO₃), insbesondere Natriummetasilikat (Na₂SiO₃), ist.

3. Verwendung mindestens eines Silicophosphonats (G) der allgemeinen Formel (V): 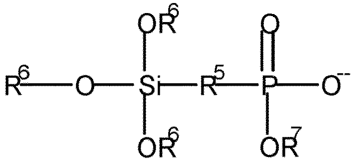 wobei
R⁵ ein zweiwertiger organischer Rest ist, bevorzugt eine 1,ω-Alkylengruppe mit 1 bis 6 und bevorzugt 1 bis 4 Kohlenstoffatomen, weiter bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wasserstoff, C₁- bis C₄-Alkyl oder Hydroxy-C₂- bis -C₄-alkyl ist, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, weiter bevorzugt Wasserstoff, Methyl, Ethyl oder Propyl,
und R⁷ C₁- bis C₄-Alkyl ist,
zur Verbesserung der Lagerstabilität von Kühlmitteln oder Kühlmittelkonzentraten, die mindestens ein anorganisches Silikat (D) enthalten.

4. Kühlmittel, umfassend
(A) mindestens ein Glykol,
(B) Wasser,
(C) mindestens ein Azolderivat,
(D) mindestens ein anorganisches Silikat,
(E) gegebenenfalls mindestens ein tertiäres Amin, bevorzugt ein tertiäres Amin mit mindestens einer 2-Hydroxyethyl- oder 2-Hydroxypropylgruppe,
(F) mindestens eine Carbonsäure,
(G) mindestens ein Silicophosphonat der allgemeinen Formel (V): 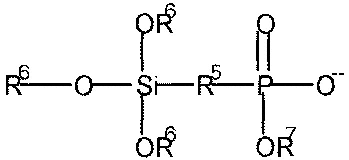 wobei
R⁵ ein zweiwertiger organischer Rest ist, bevorzugt eine 1,ω-Alkylengruppe mit 1 bis 6 und bevorzugt 1 bis 4 Kohlenstoffatomen, weiter bevorzugt Methylen, 1,2-Ethylen, 1,2-Propylen, 1,3-Propylen oder 1,4-Butylen, ganz besonders bevorzugt 1,2-Ethylen oder 1,3-Propylen und insbesondere 1,2-Ethylen,
R⁶ unabhängig voneinander Wasserstoff, C₁- bis C₄-Alkyl oder Hydroxy-C₂- bis -C₄-alkyl ist, bevorzugt Wasserstoff, Methyl, Ethyl, n-Propyl, iso-Propyl, n-Butyl, iso-Butyl, sec-Butyl oder tert-Butyl, 2-Hydroxyethyl oder 2-Hydroxypropyl, weiter bevorzugt Wasserstoff, Methyl, Ethyl oder Propyl,
und R⁷ C₁- bis C₄-Alkyl ist,
(H) gegebenenfalls mindestens ein weiteres Kühlmitteladditiv.

5. Kühlmittel nach Anspruch 4, wobei das Glykol (A) aus der Gruppe bestehend aus Monoethylenglykol, Diethylenglykol, Triethylenglykol, Tetraethylenglykol, Monopropylenglykol, Dipropylenglykol, 1,3-Propandiol, höheren Polyalkylenglykolen, Alkylenglykolethern und Glycerin ausgewählt ist.

6. Kühlmittel nach einem der vorhergehenden Ansprüche, wobei das Azolderivat (C) aus der Gruppe bestehend aus Benzimidazol, Benzotriazol, Tolutriazol, hydriertem Tolutriazol, (2-Benzothiazylthio)essigsäure und (2-Benzothiazylthio)propionsäure ausgewählt ist.

7. Kühlmittel nach einem der Ansprüche 4 bis 6, wobei das anorganische Silikat (D) aus der Gruppe bestehend aus Orthosilikaten (SiO₄⁴⁻), Metasilikaten (SiO₃²⁻) und Pyrosilikaten (Si₂O₇⁶⁻) ausgewählt ist, weiter bevorzugt Metasilikat (SiO₃²⁻) ist und ganz besonders bevorzugt Natriummetasilikat (Na₂SiO₃) oder Kaliummetasilikat (K₂SiO₃), insbesondere Natriummetasilikat (Na₂SiO₃), ist.

8. Kühlmittel nach einem der Ansprüche 4 bis 7, wobei es sich bei der Carbonsäure (F) um eine Mono- oder Dicarbonsäure oder Mischungen davon, bevorzugt eine aliphatische Mono- oder aliphatische Dicarbonsäure oder Mischungen davon, handelt.

9. Kühlmittel nach einem der Ansprüche 4 bis 8, wobei es sich bei der Carbonsäure (F) um eine lineare oder verzweigte Monocarbonsäure (F1), bevorzugt eine verzweigte aliphatische Monocarbonsäure, weiter bevorzugt mit 5 bis 14 Kohlenstoffatomen, ganz besonders bevorzugt 6 bis 12 Kohlenstoffatomen, handelt.

10. Kühlmittel nach einem der Ansprüche 4 bis 9, wobei die Monocarbonsäure (F1) aus der Gruppe bestehend aus 2-Ethylhexansäure und Isononansäure ausgewählt ist.

11. Kühlmittel nach einem der Ansprüche 4 bis 10, wobei es sich bei der Carbonsäure (F) um eine lineare oder verzweigte Dicarbonsäure (F2), bevorzugt eine lineare aliphatische Dicarbonsäure, weiter bevorzugt mit 5 bis 14 Kohlenstoffatomen, ganz besonders bevorzugt 6 bis 12 Kohlenstoffatomen, handelt.

12. Kühlmittel nach einem der Ansprüche 4 bis 11, wobei die Dicarbonsäure (F2) aus der Gruppe bestehend aus Adipinsäure, Sebacinsäure, Azelainsäure und Dodecandisäure ausgewählt ist.

## Revendications

1. Procédé pour l'amélioration de la stabilité au stockage de silicates inorganiques (D) dans des réfrigérants ou des concentrés de réfrigérants, **caractérisé en ce que** le réfrigérant ou le concentré de réfrigérants comprend, outre le silicate inorganique (D), au moins un silicophosphonate (G) de la structure générale (V) 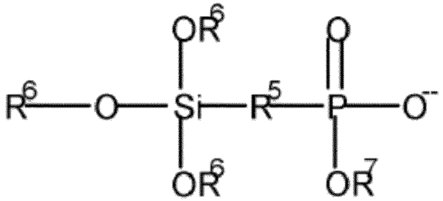 où
R⁵ est un radical organique divalent, préférablement un groupe 1,ω-alkylène comportant 1 à 6, préférablement 1 à 4 atomes de carbone, plus préférablement méthylène, 1,2-éthylène, 1,2-propylène, 1,3-propylène ou 1,4-butylène, le plus préférablement 1,2-éthylène ou 1,3-propylène, et notamment 1,2-éthylène,
R⁶ indépendamment d'un autre est hydrogène, C₁- à C₄-alkyle, ou hydroxy-C₂- à C₄-alkyle, préférablement hydrogène, méthyle, éthyle, n-propyle, iso-propyle, n-butyle, iso-butyle, sec-butyle ou tert-butyle, 2-hydroxyéthyle, ou 2-hydroxypropyle, plus préférablement hydrogène, méthyle, éthyle ou propyle,
et R⁷ est C₁- à C₄-alkyle.

2. Procédé selon la revendication 1, **caractérisé en ce que** le silicate inorganique (D) est choisi dans le groupe constitué par des orthosilicates (SiO₄⁴⁻), des métasilicates (SiO₃²⁻), et des pyrosilicates (Si₂O₇⁶⁻), plus préférablement est un métasilicate (SiO₃²⁻), et le plus préférablement est le métasilicate de sodium (Na₂SiO₃) ou le métasilicate de potassium (K₂SiO₃), notamment le métasilicate de sodium (Na₂SiO₃).

3. Utilisation d'au moins un silicophosphonate (G) de la structure générale (V) 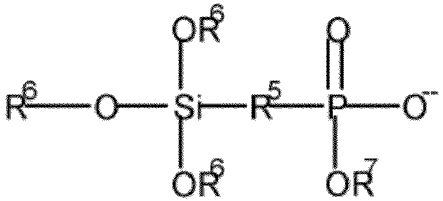 où
R⁵ est un radical organique divalent, préférablement un groupe 1,ω-alkylène comportant 1 à 6, préférablement 1 à 4 atomes de carbone, plus préférablement méthylène, 1,2-éthylène, 1,2-propylène, 1,3-propylène ou 1,4-butylène, le plus préférablement 1,2-éthylène ou 1,3-propylène, et notamment 1,2-éthylène,
R⁶ indépendamment d'un autre est hydrogène, C₁- à C₄-alkyle, ou hydroxy-C₂- à C₄-alkyle, préférablement hydrogène, méthyle, éthyle, n-propyle, iso-propyle, n-butyle, iso-butyle, sec-butyle ou tert-butyle, 2-hydroxyéthyle, ou 2-hydroxypropyle, plus préférablement hydrogène, méthyle, éthyle ou propyle,
et R⁷ est C₁- à C₄-alkyle
pour l'augmentation de la stabilité au stockage de réfrigérants ou de concentrés de réfrigérants contenant au moins un silicate inorganique (D).

4. Réfrigérant, comprenant
(A) au moins un glycol
(B) de l'eau
(C) au moins un dérivé d'azole
(D) au moins un silicate inorganique
(E) éventuellement au moins une amine tertiaire, préférablement une amine tertiaire portant au moins un groupe 2-hydroxyéthyle ou 2-hydroxypropyle
(F) au moins un acide carboxylique
(G) au moins un silicophosphonate (G) de la structure générale (V) 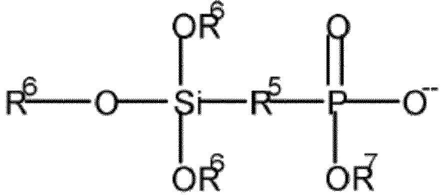 où
R⁵ est un radical organique divalent, préférablement un groupe 1,ω-alkylène comportant 1 à 6, préférablement 1 à 4 atomes de carbone, plus préférablement méthylène, 1,2-éthylène, 1,2-propylène, 1,3-propylène ou 1,4-butylène, le plus préférablement 1,2-éthylène ou 1,3-propylène, et notamment 1,2-éthylène,
R⁶ indépendamment d'un autre est hydrogène, C₁-à C₄-alkyle, ou hydroxy-C₂- à C₄-alkyle, préférablement hydrogène, méthyle, éthyle, n-propyle, iso-propyle, n-butyle, iso-butyle, sec-butyle ou tert-butyle, 2-hydroxyéthyle, ou 2-hydroxypropyle, plus préférablement hydrogène, méthyle, éthyle ou propyle,
et R⁷ est C₁- à C₄-alkyle
(H) éventuellement au moins un additif de réfrigérant supplémentaire.

5. Réfrigérant selon la revendication 4, le glycol (A) étant choisi dans le groupe constitué par le monoéthylèneglycol, le diéthylèneglycol, le triéthylèneglycol, le tétraéthylèneglycol, le monopropylèneglycol, le dipropylèneglycol, le 1,3-propanediol, des polyalkylèneglycols supérieurs, des éthers d'alkylèneglycol, et le glycérol.

6. Réfrigérant selon l'une quelconque des revendications précédentes, le dérivé d'azole (C) étant choisi dans le groupe constitué par le benzimidazole, le benzotriazole, un tolutriazole, un tolutriazole hydrogéné, l'acide (2-benzothiazylthio)acétique, et l'acide(2-benzothiazylthio)propionique.

7. Réfrigérant selon l'une quelconque des revendications 4 à 6, le silicate inorganique (D) étant choisi dans le groupe constitué par des orthosilicates (SiO₄⁴⁻), des métasilicates (SiO₃²⁻), et des pyrosilicates (Si₂O₇⁶⁻), plus préférablement étant un métasilicate (SiO₃²⁻), et le plus préférablement étant le métasilicate de sodium (Na₂SiO₃) ou le métasilicate de potassium (K₂SiO₃), notamment le métasilicate de sodium (Na₂SiO₃).

8. Réfrigérant selon l'une quelconque des revendications 4 à 7, l'acide carboxylique (F) étant un acide monocarboxylique ou dicarboxylique ou des mélanges correspondants, préférablement un acide monocarboxylique aliphatique ou dicarboxylique aliphatique ou des mélanges correspondants.

9. Réfrigérant selon l'une quelconque des revendications 4 à 8, l'acide carboxylique (F) étant un acide monocarboxylique linéaire ou ramifié (F1), préférablement un acide monocarboxylique aliphatique ramifié, plus préférablement comportant 5 à 14 atomes de carbone, le plus préférablement de 6 à 12 atomes de carbone.

10. Réfrigérant selon l'une quelconque des revendications 4 à 9, l'acide monocarboxylique (F1) étant choisi dans le groupe constitué par l'acide 2-éthylhexanoïque et l'acide isononanoïque.

11. Réfrigérant selon l'une quelconque des revendications 4 à 10, l'acide carboxylique (F) étant un acide dicarboxylique linéaire ou ramifié (F2), préférablement un acide dicarboxylique aliphatique linéaire, plus préférablement comportant 5 à 14 atomes de carbone, le plus préférablement de 6 à 12 atomes de carbone.

12. Réfrigérant selon l'une quelconque des revendications 4 à 11, l'acide dicarboxylique (F2) étant choisi dans le groupe constitué par l'acide adipique, l'acide sébacique, l'acide azélaïque et l'acide dodécanedioïque.
